(19) **Europäisches Patentamt**
**European Patent Office**
**Office européen des brevets**

(11) **EP 2 847 842 B1**

(12) **EUROPÄISCHE PATENTSCHRIFT**

(45) Veröffentlichungstag und Bekanntmachung des Hinweises auf die Patenterteilung:
**01.08.2018   Patentblatt 2018/31**

(21) Anmeldenummer: **12734851.4**

(22) Anmeldetag: **26.06.2012**

(51) Int Cl.:
*H02J 3/38* (2006.01)          *G05F 1/66* (2006.01)
*H02J 3/46* (2006.01)          *H02J 3/00* (2006.01)

(86) Internationale Anmeldenummer:
**PCT/EP2012/062283**

(87) Internationale Veröffentlichungsnummer:
**WO 2014/000767 (03.01.2014 Gazette 2014/01)**

(54) **ENERGIEVERSORGUNGSANLAGE MIT VORVERARBEITUNGSEINRICHTUNG**

POWER SUPPLY SYSTEM COMPRISING A PREPROCESSING DEVICE

INSTALLATION D'ALIMENTATION EN ÉNERGIE POURVUE D'UN DISPOSITIF DE PRÉTRAITEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.03.2015   Patentblatt 2015/12**

(73) Patentinhaber: **Siemens Aktiengesellschaft**
**80333 München (DE)**

(72) Erfinder: **PLÖTT, Norbert**
**91058 Erlangen (DE)**

(56) Entgegenhaltungen:
**US-A1- 2007 213 878**

• **MIGUEL A ORTEGA-VAZQUEZ ET AL: "Estimating the Spinning Reserve Requirements in Systems With Significant Wind Power Generation Penetration", IEEE TRANSACTIONS ON POWER SYSTEMS, IEEE SERVICE CENTER, PISCATAWAY, NJ, US, Bd. 21, Nr. 1, 1. Februar 2009 (2009-02-01), Seiten 114-124, XP011238484, ISSN: 0885-8950**
• **ANSTINE L T ET AL: "Application of Probability Methods to the Determination of Spinning Reserve Requirements for the Pennsylvania New Jersey Maryland Interconnection", IEEE TRANSACTIONS ON POWER APPARATUS AND SYSTEMS, IEEE INC. NEW YORK, US, Bd. 82, Nr. 68, 1. Oktober 1963 (1963-10-01), Seiten 726-735, XP011159299, ISSN: 0018-9510, DOI: 10.1109/TPAS.1963.291390**
• **MACPHERSON S D J ET AL: "Modeling Stochastic Contingency Reserve Activation", INNOVATIVE TECHNOLOGIES FOR AN EFFICIENT AND RELIABLE ELECTRICITY SUPPLY (CITRES), 2010 IEEE CONFERENCE ON, IEEE, PISCATAWAY, NJ, USA, 1. Januar 2010 (2010-01-01), Seiten 407-414, XP009162092, DOI: 10.1109/CITRES.2010.5619769 ISBN: 978-1-4244-6076-2**

**Beschreibung**

Die Erfindung bezieht sich auf eine Energieversorgungsanlage mit einer Mehrzahl an Energieerzeugungseinrichtungen und einer Mehrzahl an Energieverbrauchseinrichtungen sowie einer Leiteinrichtung, die die Energieversorgungsanlage steuern kann.

In einer Energieversorgungsanlage für elektrische Energie muss stets ein Gleichgewicht zwischen eingespeister und entnommener elektrischer Leistung gewährleistet sein. Lastschwankungen müssen innerhalb von Sekunden nach ihrem Auftreten kompensiert werden, damit die System- bzw. Netzfrequenz der Energieversorgungsanlage bzw. des Energieverteilnetzes der Energieversorgungsanlage in vorgegebenen engen Grenzen bleibt.

Damit ein solches Gleichgewicht erreicht werden kann, werden üblicherweise synchron mit der Systemfrequenz mitlaufende Energieerzeugungseinrichtungen bzw. Generatoren nicht bis zu ihrer Nennleistung voll ausgelastet, sondern es wird stets eine gewisse Regelreserve vorgehalten. Mit anderen Worten erfolgt die Steuerung der Energieversorgungsanlage durch die Leiteinrichtung sozusagen anhand eines Sollverbrauchswertes, der den zu erwartenden Energieverbrauch der Energieversorgungsanlage angibt sowie zumindest eines die Regelreserve bzw. die Reserveleistung angebenden Reservewerts, wobei der Reservewert die von der Energieversorgungsanlage bereitzustellende Reserveleistung angibt, mit der sich im Falle einer Abweichung des tatsächlichen Energieverbrauchs vom Sollverbrauch Notmaßnahmen, beispielsweise in Form von Zwangsabschaltungen, Hinzuschalten von Energie externer Netze, etc., vermeiden lassen.

Der Reservewert bzw. die Regelreserve werden bei heutigen Energieversorgungsanlagen in der Regel durch speziell geschultes Bedienpersonal geschätzt oder berechnet und manuell in die Leiteinrichtung eingegeben. Entsprechendes gilt für die Regelreserve bzw. den Reservewert, der ebenfalls durch das geschulte Bedienpersonal ermittelt und eingegeben werden muss.

Im Stand der Technik offenbaren die Schriften XP011245409 und XP009162092 die Berechnung einer Regelleistungsreserve anhand von Wahrscheinlichkeiten, um die Zuverlässigkeit der Energieversorgung in einem gewünschten Bereich zu halten.

Die US 200770213878 A1 offenbart eine Methode zur vorausschauenden Steuerung eines Energieversorgungsnetzes.

Der Erfindung liegt die Aufgabe zugrunde, eine Energieversorgungsanlage anzugeben, die sich einfacher handhaben lässt und den Einsatz geschulten Bedienpersonals im geringerem Umfange als bei vorbekannten Energieversorgungsanlagen erforderlich macht.

Diese Aufgabe wird erfindungsgemäß durch eine Energieversorgungsanlage mit den Merkmalen gemäß Patentanspruch 1 gelöst. Vorteilhafte Ausgestaltungen der erfindungsgemäßen Energieversorgungsanlage sind in Unteransprüchen angegeben.

Danach ist vorgesehen, dass die Energieversorgungsanlage eine Vorverarbeitungseinrichtung aufweist, die geeignet ist, anhand aufgezeichneter Verbrauchswerte der Vergangenheit und anhand eines benutzerseitig vorgegebenen Wahrscheinlichkeitswerts, der die Wahrscheinlichkeit für einen notmaßnahmenfreien Betrieb der Energieversorgungsanlage vorgibt, den Sollverbrauchswert und den zumindest einen Reservewert zu berechnen, mit dem sich der notmaßnahmenfreie Betrieb mit der vorgegebenen Wahrscheinlichkeit erreichen lässt.

Ein wesentlicher Vorteil der erfindungsgemäßen Energieversorgungsanlage besteht darin, dass bei dieser weder der Sollverbrauchswert noch der Reservewert manuell durch geschultes Bedienpersonal ermittelt werden muss, da die entsprechenden Werte von der Vorverarbeitungseinrichtung automatisch bzw. selbsttätig ermittelt werden. Um eine solche Ermittlung des Sollverbrauchswerts und des Reservewerts zu ermöglichen, muss die Vorverarbeitungseinrichtung lediglich mit Verbrauchswerten der Vergangenheit und einem benutzerseitig vorgegebenen Wahrscheinlichkeitswert versorgt werden, der die Wahrscheinlichkeit für einen notmaßnahmefreien Betrieb der Energieversorgungsanlage vorgibt. Mit anderen Worten kann sich die Energieversorgungsanlage aufgrund der erfindungsgemäß vorgesehenen Vorverarbeitungseinrichtung völlig selbsttätig steuern, wenn für den Betrieb der Anlage einmalig ein Wahrscheinlichkeitswert vorgegeben wird, der die Betriebsart bzw. die Inkaufnahme von Ausfallrisiken festlegt.

Ein weiterer wesentlicher Vorteil der erfindungsgemäßen Energieversorgungsanlage besteht darin, dass die Vorverarbeitungseinrichtung eine Anpassung des Sollverbrauchswertes und des Reservewertes vornehmen kann, wenn die Verbrauchswerte der Vergangenheit eine Änderungstendenz erkennen lassen. Auch im Falle einer sich ändernden Anzahl an Energieerzeugungseinrichtungen oder Energieverbrauchseinrichtungen oder einer Änderung des Energieerzeugungs- oder Verbrauchsverhaltens der vorhandenen Einrichtungen ist es also nicht nötig, dass bedienerseitig eingegriffen wird; denn durch die Auswertung der Werte der Vergangenheit kann eine Änderung des Erzeugungsverhaltens oder des Verbrauchsverhaltens erkannt und zur Aktualisierung des Sollverbrauchswerts und des Reservewerts berücksichtigt werden. Dabei wird der benutzerseitig vorgegebene Wahrscheinlichkeitswert, der das tolerierte Ausfallrisiko der Energieversorgungsanlage beschreibt, einbezogen, so dass sich abgesehen von den jeweiligen Absolutwerten des Sollverbrauchswerts und des Reservewerts hinsichtlich des Risikos von Notmaßnahmen nichts ändert. Ein manueller Eingriff ist in der Regel überflüssig.

Der benutzerseitig vorgegebene Wahrscheinlichkeitswert kann in numerischer Form in die Vorverarbeitungseinrichtung eingegeben werden, beispielsweise als Zahlenwert in der Form 10 %, 20 %, usw. Alternativ ist es möglich, den Wahrscheinlichkeitswert als Zuverlässigkeitsziel verbal formuliert einzugeben (z. B. starker Einsatz von erneuerbaren Energieträgern, höchst zuverlässige Energieversorgung). Bei einer solchen Ausgestaltung muss lediglich in einer Datenbank hinterlegt werden, welcher numerische Wahrscheinlichkeitswert mit dem verbal formulierten Zuverlässigkeitsziel korreliert, so dass eine automatische bzw. selbsttätige Umsetzung in einen numerischen Wahrscheinlichkeitswert seitens der Vorverarbeitungseinrichtung erfolgen kann.

Bei der Vorverarbeitungseinrichtung kann beispielsweise vorgesehen sein, dass eine Berechnung des Reservewerts und des Sollverbrauchswerts erstmals während des Betriebs der Energieversorgungsanlage erfolgt, wenn nach Eingang der ersten Verbrauchswerte der Energieversorgungsanlage "Verbrauchswerte der Vergangenheit" vorliegen, auf deren Basis eine Auswertung anhand des benutzerseitig vorgegebenen Wahrscheinlichkeitswerts und damit eine Ermittlung von Sollverbrauchswert und Regelreserveleistung möglich ist. Vor einer erstmaligen Berechnung kann mit vorgegebenen Standardwerten gearbeitet werden, die durch die "Verbrauchswerte der Vergangenheit" aktualisiert werden.

Besonders einfach und damit vorteilhaft lässt sich die Ermittlung des Reservewerts und des Sollverbrauchswerts anhand einer statistischen Auswertung durchführen; demgemäß wird es als vorteilhaft angesehen, wenn die Vorverarbeitungseinrichtung derart ausgestaltet ist, dass sie mit den aufgezeichneten Verbrauchswerten der Vergangenheit die statistische Verteilung der Verbrauchswerte ermittelt und anhand der statistischen Verteilung bestimmt, welcher minimale Verbrauchswert und welcher maximale Verbrauchswert für den vorgegebenen Wahrscheinlichkeitswert auftreten könnte, und anhand des minimalen und maximalen Verbrauchswerts den zumindest einen Reservewert bestimmt.

Vorzugsweise wird ein einziger Reservewert bestimmt, der sowohl für den Fall, dass der tatsächliche Energieverbrauch den Sollverbrauch überschreitet, als auch für den Fall, dass der tatsächliche Energieverbrauch den Sollverbrauch unterschreitet, herangezogen wird. Eine solche Ausgestaltung wird insbesondere dann von Vorteil sein, wenn die Energieverbrauchswerte normalverteilt, insbesondere standardverteilt sind.

Für den Fall anderer Verteilungen, insbesondere asymmetrischer Verteilungen um den Mittelwert des Energieverbrauchs herum, wird es als vorteilhaft angesehen, wenn zwei Reservewerte bestimmt werden, nämlich ein erster Reservewert für den Fall, dass der tatsächliche Energieverbrauch den Sollverbrauch überschreitet, und ein zweiter Reservewert für den Fall, dass der tatsächliche Energieverbrauch den Sollverbrauch unterschreitet.

Die Ermittlung des Sollverbrauchswerts und des oder der Reservewerte lässt sich in besonders einfacher Weise erreichen, wenn die Vorverarbeitungseinrichtung derart ausgestaltet ist, dass sie den Sollverbrauchswert durch Mittelwertbildung aus den aufgezeichneten Verbrauchswerten der Vergangenheit, einen ersten Reservewert durch Differenzbildung zwischen dem Sollverbrauchswert und dem maximalen Verbrauchswert und einen zweiten Reservewert durch Differenzbildung zwischen dem Sollverbrauchswert und dem minimalen Verbrauchswert ermittelt.

Im Falle einer symmetrischen Verteilung der Energieverbrauchswerte um einen Mittelwert herum wird es als vorteilhaft angesehen, wenn lediglich ein einziger Reservewert ermittelt wird, sei es durch Differenzbildung zwischen dem Sollverbrauchswert und dem maximalen Verbrauchswert oder durch Differenzbildung zwischen dem Sollverbrauchswert und dem minimalen Verbrauchswert, da beide Differenzbildungen zu denselben Reservewerten führen bzw. der mit dem maximalen Verbrauchswert gebildete Reservewert dem mit dem minimalen Verbrauchswert gebildeten Reservewert entspricht.

Um eine Aktualisierung der in der Vorverarbeitungseinrichtung vorliegenden Verbrauchswerte der Vergangenheit zu ermöglichen, wird es als vorteilhaft angesehen, wenn die Vorverarbeitungseinrichtung derart ausgestaltet ist, dass sie während des Betriebs die Verbrauchswerte der Vergangenheit aktualisiert, indem sie die jeweils ältesten aufgezeichneten Verbrauchswerte der Vergangenheit durch aktuell aufgezeichnete Verbrauchswerte ersetzt und nach einer Aktualisierung der Verbrauchswerte jeweils eine statistische Verteilungsfunktion berechnet, die die statistische Verteilung der aktualisierten Verbrauchswerte der Vergangenheit beschreibt.

In aller Regel ist davon auszugehen, dass die Verbrauchswerte der Energieversorgungsanlage normalverteilt sind; demgemäß wird es als vorteilhaft angesehen, wenn die Vorverarbeitungseinrichtung derart ausgestaltet ist, dass sie die statistische Verteilungsfunktion unter der Annahme einer Normalverteilung der Verbrauchswerte berechnet.

Die Auswertung der aufgezeichneten Verbrauchswerte der Vergangenheit kann darüber hinaus weitere Aspekte berücksichtigen, insbesondere die jeweilige Tageszeit, zu der die Verbrauchswerte aufgezeichnet sind. Aus diesem Grunde wird es als vorteilhaft angesehen, wenn die Vorverarbeitungseinrichtung derart ausgestaltet ist, dass sie die aufgezeichneten Verbrauchswerte der Vergangenheit nach vorgegebenen Tageszeitintervallen auswertet, indem sie pro Tageszeitintervall die statistische Verteilung der Verbrauchswerte ermittelt sowie bestimmt, welcher minimale Verbrauchswert und welcher maximale Verbrauchswert für den vorgegebenen Wahrscheinlichkeitswert in dem aktuellen Tageszeitintervall auftreten könnte, und anhand des minimalen und maximalen Verbrauchswerts den Sollverbrauchswert und den Reservewert tageszeitintervallbezogen ermittelt.

Darüber hinaus können die Verbrauchswerte auch über die Wochentage schwanken, so dass es als vorteilhaft angesehen wird, wenn die Vorverarbeitungseinrichtung derart ausgestaltet ist, dass sie die aufgezeichneten Verbrauchswerte der Vergangenheit wochentagsbezogen auswertet und den Sollverbrauchswert und den Reservewert wochentagsbezogen bestimmt.

Auch kann die jeweilige Außentemperatur für den Energieverbrauch der Energieversorgungsanlage von Einfluss sein, so dass gemäß einer vorteilhaften Weiterbildung der Energieversorgungsanlage vorgesehen ist, dass die Vorverarbeitungseinrichtung derart ausgestaltet ist, dass sie die aufgezeichneten Verbrauchswerte der Vergangenheit außentemperaturbezogen auswertet.

Besonders einfach und damit vorteilhaft lässt sich die Außentemperatur berücksichtigen, wenn die Vorverarbeitungseinrichtung derart ausgestaltet ist, dass sie die aufgezeichneten Verbrauchswerte der Vergangenheit unter Berücksichtigung der aktuellen Außentemperatur auswertet, wobei sie prüft, in welchem Temperaturintervall einer vorgegebenen Gruppe von Temperaturintervallen die aktuelle Außentemperatur liegt, die statistische Verteilung ausschließlich derjenigen Verbrauchswerte, die bei einer innerhalb des aktuellen Temperaturintervalls liegenden Außentemperatur gemessen worden sind, ermittelt sowie bestimmt, welcher minimale Verbrauchswert und welcher maximale Verbrauchswert für den vorgegebenen Wahrscheinlichkeitswert bei der aktuellen Außentemperatur auftreten könnte, und anhand des minimalen und maximalen Verbrauchswerts den Sollverbrauchswert und den Reservewert tageszeitintervallbezogen ermittelt.

Zusätzlich oder alternativ kann auch die Art des jeweiligen Tages berücksichtigt werden, also beispielsweise, ob es sich um einen Werktag, einen Samstag, einen Sonntag oder einen Feiertag handelt. Demgemäß wird es als vorteilhaft angesehen, wenn die Vorverarbeitungseinrichtung derart ausgestaltet ist, dass sie die aufgezeichneten Verbrauchswerte der Vergangenheit unter Berücksichtigung der Tagesart auswertet.

Mit Blick auf die Berücksichtigung der Art des Tages wird es als vorteilhaft angesehen, wenn die Vorverarbeitungseinrichtung derart ausgestaltet ist, dass sie bei der Auswertung der aufgezeichneten Verbrauchswerte der Vergangenheit berücksichtigt, welche Art von Tag vorlag, und für die Bestimmung der statistischen Verteilung der Verbrauchswerte jeweils nur solche berücksichtigt, die bei der jeweiligen Tagesart aufgenommen worden sind.

Die Vorverarbeitungseinrichtung kann beispielsweise einen Bestandteil der Leiteinrichtung bilden. Im Falle einer solchen Ausgestaltung wird es als vorteilhaft angesehen, wenn die Leiteinrichtung eine Datenverarbeitungseinrichtung umfasst und die Vorverarbeitungseinrichtung durch ein Vorarbeitungssteuersoftwaremodul gebildet ist, das von der Datenverarbeitungseinrichtung ausführbar ist.

Alternativ können die Vorverarbeitungseinrichtung und die Leiteinrichtung separate Komponenten sein, die über eine Schnittstelle miteinander verbunden sind.

Zur Beeinflussung der Energieversorgungsanlage wird es als vorteilhaft angesehen, wenn die Leiteinrichtung geeignet ist, die Energieerzeugung zumindest einer Energieerzeugungseinrichtung der Energieversorgungsanlage und/oder den Energieverbrauch zumindest einer Energieverbrauchseinrichtung der Energieversorgungsanlage zu steuern.

Die Erfindung bezieht sich darüber hinaus auf eine Vorverarbeitungseinrichtung für eine Energieversorgungsanlage, wie sie oben beschrieben ist. Eine solche Vorverarbeitungseinrichtung ist gekennzeichnet durch einen Speicher, in dem aufgezeichnete Verbrauchswerte der Vergangenheit gespeichert sind, und eine Datenverarbeitungseinrichtung, die derart ausgestaltet ist, dass sie anhand der aufgezeichneten Verbrauchswerte und anhand eines benutzerseitig eingegebenen Wahrscheinlichkeitswerts, der die Wahrscheinlichkeit für einen notmaßnahmenfreien Betrieb der Energieversorgungsanlage vorgibt, einen Sollverbrauchswert und einen Reservewert berechnet, mit dem sich der notmaßnahmenfreie Betrieb mit der vorgegebenen Wahrscheinlichkeit erreichen lässt.

Bezüglich der Vorteile der erfindungsgemäßen Vorverarbeitungseinrichtung sei auf die obigen Ausführungen im Zusammenhang mit der erfindungsgemäßen Energieversorgungsanlage verwiesen, da die Vorteile der erfindungsgemäßen Energieversorgungsanlage denen der erfindungsgemäßen Vorverarbeitungseinrichtung im Wesentlichen entsprechen. Weiterhin wird ein Verfahren zum Steuern einer Energieversorgungsanlage offenbart, wobei die Energieversorgungsanlage eine Mehrzahl an Energieerzeugungseinrichtungen und eine Mehrzahl an Energieverbrauchseinrichtungen aufweist, wobei die Steuerung der Energieversorgungsanlage anhand eines den zu erwartenden Energieverbrauch der Energieversorgungsanlage angebenden Sollverbrauchswerts und eines eine Reserveleistung angebenden Reservewerts durchgeführt wird, und wobei der Reservewert die von der Energieversorgungsanlage bereitzustellende Reserveleistung angibt, mit der sich im Falle einer Abweichung des tatsächlichen Energieverbrauchs vom Sollverbrauch Notmaßnahmen vermeiden lassen.

Erfindungsgemäß ist bezüglich eines solchen Verfahrens vorgesehen, dass anhand aufgezeichneter Verbrauchswerte der Vergangenheit und anhand eines benutzerseitig vorgegebenen Wahrscheinlichkeitswerts, der die Wahrscheinlichkeit für einen notmaßnahmenfreien Betrieb der Energieversorgungsanlage vorgibt, der Sollverbrauchswert und der Reservewert berechnet werden, mit dem sich der notmaßnahmenfreie Betrieb mit der vorgegebenen Wahrscheinlichkeit erreichen lässt.

Bezüglich der Vorteile des erfindungsgemäßen Verfahrens sei auf die obigen Ausführungen im Zusammenhang mit der erfindungsgemäßen Energieversorgungsanlage verwiesen, da die Vorteile der erfindungsgemäßen Energieversorgungsanlage denen des erfindungsgemäßen Verfahrens im Wesentlichen entsprechen.

Die Erfindung wird nachfolgend anhand von Ausführungsbeispielen näher erläutert; dabei zeigen beispielhaft

Figur 1  ein erstes Ausführungsbeispiel für eine erfindungsgemäße Energieversorgungsanlage, die mit einem Ausführungsbeispiel für eine erfindungsgemäße Vorverarbeitungseinrichtung ausgestattet ist und anhand derer auch das erfindungsgemäße Verfahren beispielhaft erläutert wird,

Figur 2  beispielhaft Verbrauchswerte der Vergangenheit, die von der Vorverarbeitungseinrichtung gemäß Figur 1 ausgewertet werden, wobei die Verbrauchswerte über der Tageszeit für verschiedene Tage aufgetragen sind,

Figur 3  die Dichteverteilung der Verbrauchswerte für einen ausgewählten Zeitpunkt bzw. für ein ausgewähltes Zeitintervall an verschiedenen Tagen,

Figur 4  die sich aus der Dichteverteilung der Verbrauchswerte ergebende statistische Verteilungsfunktion der Verbrauchswerte sowie beispielhaft die Ermittlung von Sollverbrauchswert und Reservewert anhand der statistischen Verteilungsfunktion,

Figur 5  ein zweites Ausführungsbeispiel für eine Energieversorgungsanlage, bei der anstelle eines einzigen Reservewerts zwei Reservewerte gebildet werden,

Figur 6  ein drittes Ausführungsbeispiel für eine erfindungsgemäße Energieversorgungsanlage, die mit einem Filter versehen ist, der eine wochentagsindividuelle, außentemperaturindividuelle und/oder tagesartindividuelle Auswertung der Verbrauchswerte der Vergangenheit ermöglicht,

Figur 7  ein viertes Ausführungsbeispiel für eine Energieversorgungsanlage, bei der eine Vorverarbeitungseinrichtung in einer Leiteinrichtung der Energieversorgungsanlage integriert ist,

Figur 8  ein fünftes Ausführungsbeispiel für eine Energieversorgungsanlage, bei der eine Vorverarbeitungseinrichtung mit Filter in einer Leiteinrichtung der Energieversorgungsanlage integriert ist, und

Figur 9  ein sechstes Ausführungsbeispiel für eine Energieversorgungsanlage, bei der eine Vorverarbeitungseinrichtung in der Leiteinrichtung integriert ist und zwei Reservewerte gebildet werden.

In den Figuren werden der Übersicht halber für identische oder vergleichbare Komponenten stets dieselben Bezugszeichen verwendet.

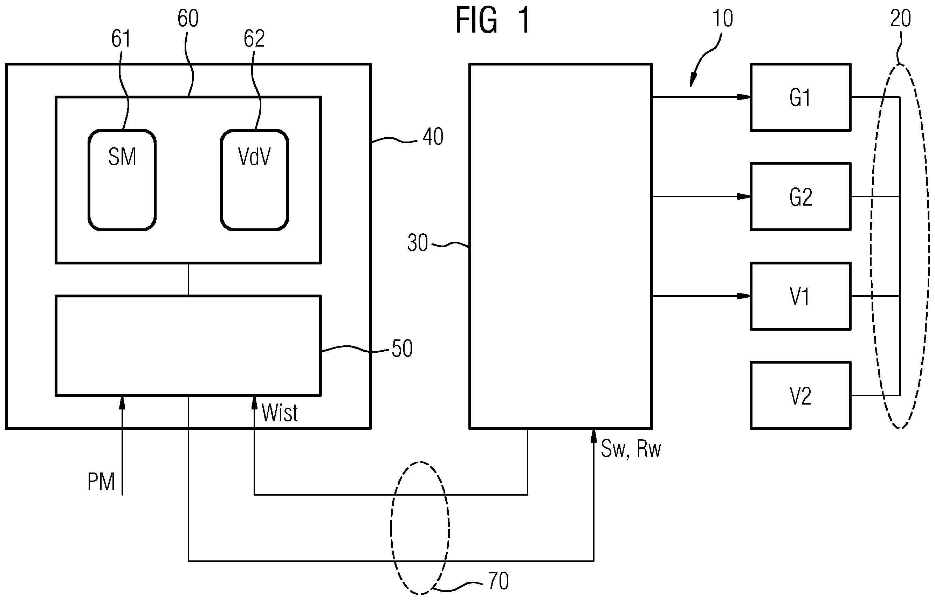

In der Figur 1 sieht man ein Ausführungsbeispiel für eine Energieversorgungsanlage 10, die eine Vielzahl an Energieerzeugungseinrichtungen, von denen aus Gründen der Übersicht lediglich zwei dargestellt und mit dem Bezugszeichen G1 und G2 bezeichnet sind, sowie eine Vielzahl an Energieverbrauchseinrichtungen, von denen aus Gründen der Übersicht in der Figur 1 lediglich zwei dargestellt und mit den Bezugszeichen V1 und V2 bezeichnet sind, umfasst. Der Energieaustausch zwischen den Energieerzeugungseinrichtungen G1 und G2 und den Energieverbrauchseinrichtungen V1 und V2 erfolgt über ein Energieverteilnetz 20 der Energieversorgungsanlage 10.

Um zu erreichen, dass der Energieverbrauch der Energieverbrauchseinrichtungen V1 und V2 stets der Energiemenge entspricht, die von den Energieerzeugungseinrichtungen G1 und G2 erzeugt werden, ist eine Leiteinrichtung 30 vorgesehen, die die Energieerzeugungseinrichtungen G1 und G2 steuern kann. Bei dem Ausführungsbeispiel gemäß Figur 1 ist darüber hinaus vorgesehen, dass die Leiteinrichtung 30 zumindest auch eine der Energieverbrauchseinrichtungen ansteuern kann, beispielsweise die Energieverbrauchseinrichtung V1, um deren Energieverbrauch zu beeinflussen, also zu senken oder zu steigern.

Um eine Steuerung der Energieerzeugungseinrichtungen G1 und G2 sowie der Energieverbrauchseinrichtung V1 zu ermöglichen, wird der Leiteinrichtung 30 ein Sollverbrauchswert Sw sowie ein Reservewert Rw vorgegeben. Der Sollverbrauchswert Sw gibt den zu erwartenden Energieverbrauch der in der Energieversorgungsanlage 10 vorhandenen Energieverbrauchseinrichtungen V1 und V2 an. Der Reservewert Rw beschreibt eine Reserveleistung, den die Energieversorgungsanlage 10, also konkret die beiden Energieerzeugungseinrichtungen G1 und G2, bereitstellen können sollen, falls der tatsächliche Energieverbrauch vom Sollverbrauch abweicht, damit Notmaßnahmen, wie beispielsweise Zwangsabschaltungen, vermieden werden.

Bei dem Ausführungsbeispiel gemäß Figur 1 werden der Reservewert Rw sowie der Sollverbrauchswert Sw nicht benutzerseitig vorgegeben, sondern selbsttätig von einer Vorverarbeitungseinrichtung 40 ermittelt bzw. berechnet und von dieser in die Leiteinrichtung 30 eingespeist.

Die Vorverarbeitungseinrichtung 40 umfasst hierzu eine Datenverarbeitungseinrichtung 50 sowie einen Speicher 60. Der Speicher 60 weist einen ersten Datenspeicherbereich 61 auf, in dem ein Vorverarbeitungssteuermodul SM abgespeichert ist. Das Vorverarbeitungssteuermodul SM enthält Softwarebefehle, die von der Datenverarbeitungseinrichtung 50 ausgeführt werden können, um die Funktion der Vorverarbeitungseinrichtung 40 zu gewährleisten.

In einem zweiten Datenspeicherbereich 62 des Speichers 60 befinden sich Verbrauchswerte der Vergangenheit, die mit dem Bezugzeichen VdV gekennzeichnet sind.

Die Vorverarbeitungseinrichtung 40 steht mit der Leiteinrichtung 30 über eine Schnittstelle 70 in Verbindung.

Die Energieversorgungsanlage 10 gemäß Figur 1 lässt sich beispielsweise wie folgt betreiben.

Die Datenverarbeitungseinrichtung 50 der Vorverarbeitungseinrichtung 40 führt das Vorverarbeitungssteuermodul SM aus, wodurch eine Berechnung des Reservewerts Rw und des Sollverbrauchswerts Sw anhand eines benutzerseitig vorgegebenen Wahrscheinlichkeitswerts PM bewirkt wird. Der Wahrscheinlichkeitswert PM gibt an, mit welcher Wahrscheinlichkeit ein notmaßnahmenfreier Betrieb der Energieversorgungsanlage erreicht werden soll. Um eine solche Berechnung zu ermöglichen, liest die Datenverarbeitungseinrichtung 50 den zweiten Speicherbereich 62 und damit die Verbrauchswerte der Vergangenheit VdV aus.

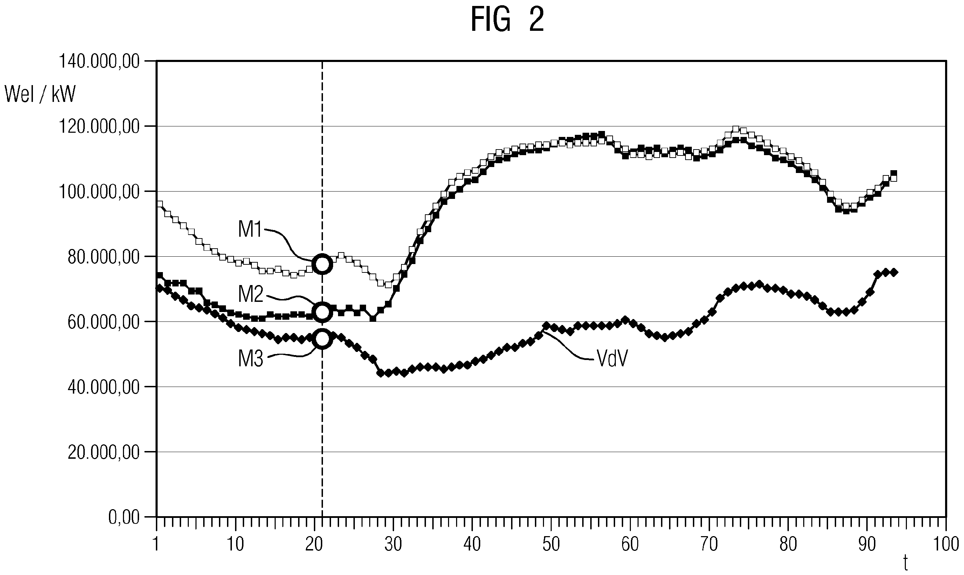

Die Figur 2 zeigt beispielhaft, wie die Verbrauchswerte der Vergangenheit VdV aussehen können. Man erkennt in der Figur 2 den Verlauf des Energieverbrauchs Wel über der Zeit t für drei verschiedene Wochentage. Dargestellt ist jeweils ein Mittelwert über 15 Minuten; aus diesem Grunde sind in der Figur 96 Messwerte über der jeweiligen Tageszeitintervallnummer aufgetragen. Das Tageszeitintervall "21" bezieht sich beispielsweise auf den Zeitraum zwischen 5:00 Uhr und 5:15 Uhr morgens. Die Messwerte der drei Messkurven für dieses Tageszeitintervall "21" sind in der Figur 2 mit den Bezugzeichen M1, M2, M3 gekennzeichnet. Es lässt sich erkennen, dass die drei Messwerte M1, M2 und M3 in einem Bereich zwischen ca. 55.000 kW und ca. 78.000 kW liegen.

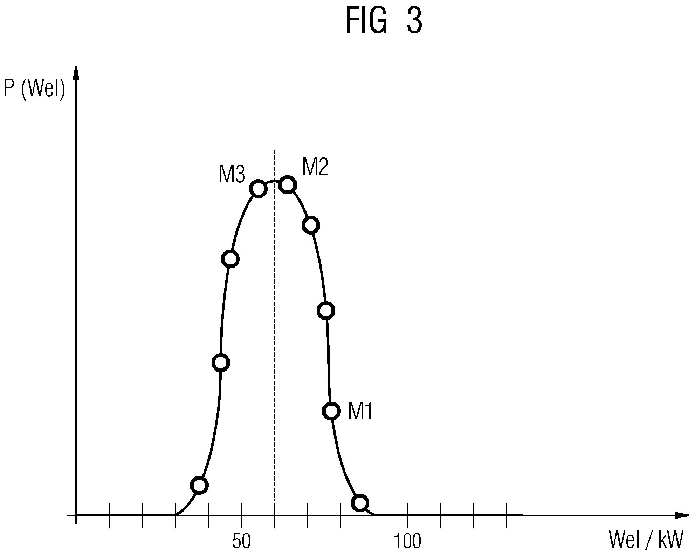

Die Figur 3 zeigt beispielhaft die Verteilung der Verbrauchswerte aus Figur 2 in einer anderen Darstellung, nämlich in Form einer Dichtefunktion P(Wel) über dem Energieverbrauch Wel. Eingezeichnet sind die drei Messwerte M1, M2 und M3, die auch in der Figur 2 entsprechend gekennzeichnet sind.

Darüber hinaus erkennt man in der Figur 3 weitere Messwerte, die sich aus entsprechenden Tageszeitmessungen ergeben, wie sie in der Figur 2 dargestellt sind. Es lässt sich erkennen, dass die Dichtefunktion P(Wel) der aufgezeichneten Messwerte näherungsweise die Form einer Gauß-Kurve aufweist, woraus sich schließen lässt, dass die Verteilung der Messwerte normalverteilt ist bzw. einer Standardverteilung entspricht.

Die Datenverarbeitungseinrichtung 50 gemäß Figur 1 kann die Dichtefunktion P(Wel) gemäß Figur 3 beispielsweise auswerten, indem sie die Verteilfunktion F(Wel) der Energieverbrauchswerte Wel durch Integration ermittelt, und zwar gemäß:

$$F(Wel) = \int_{0}^{Wel} P(W)dW$$

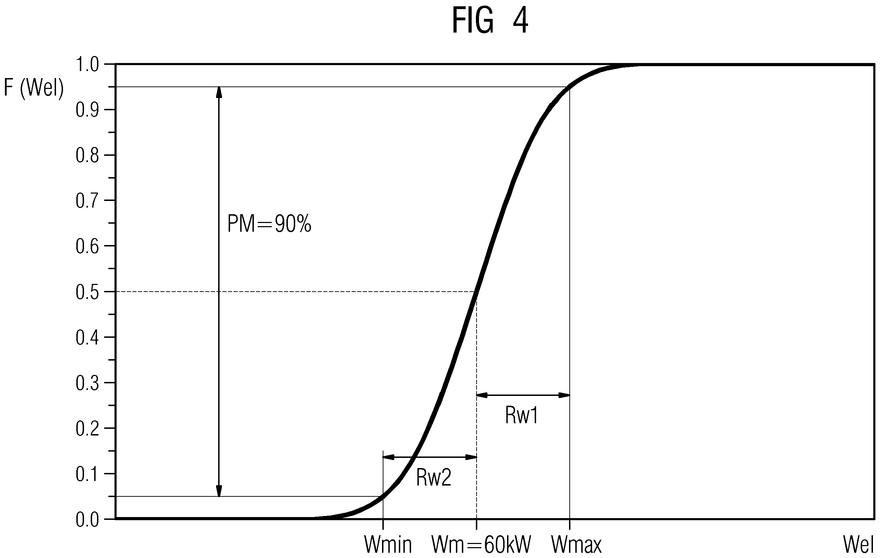

Die Verteilfunktion F(Wel) ist beispielhaft in der Figur 4 gezeigt. Man sieht, mit welcher Wahrscheinlichkeit bestimmte Energieverbrauchswerte Wel überschritten oder unterschritten werden. In der Figur 4 lässt sich beispielsweise ablesen, dass mit einer Wahrscheinlichkeit von 95 % der Energieverbrauch einen minimalen Verbrauchswert Wmin überschreiten und mit einer Wahrscheinlichkeit von 95 % einen maximalen Verbrauchswert Wmax unterschreiten wird. Mit anderen Worten wird der Energieverbrauch also mit einem Wahrscheinlichkeitswert von PM=90 % innerhalb des Verbrauchsintervalls zwischen Wmin und Wmax liegen.

In entsprechender Weise können für andere Wahrscheinlichkeitswerte PM die jeweiligen Werte für Wmin und Wmax abgelesen werden.

Durch Auswerten der Verteilfunktion F(Wel) lassen sich in einfacher Weise ein oder zwei Reservewerte Rw oder Rw1 und Rw2 sowie auch ein Sollverbrauchswert Sw ermitteln. Dabei stehen prinzipiell unterschiedliche Varianten zur Verfügung:

Variante I:

Ausgehend von dem minimalen Verbrauchswert Wmin und dem maximalen Verbrauchswert Wmax in Figur 4 kann eine Mittelwertbildung zur Berechnung des Sollwertverbrauchs Sw durchgeführt werden, und zwar gemäß:

```
Sw = Wmin + (Wmax - Wmin)/2 = Wmin/2 + Wmax/2.
```

Der Reservewert Rw für die Leiteinrichtung 30 gemäß Figur 1 kann in diesem Falle berechnet werden gemäß:

$$Rw = (Wmax - Wmin)/2.$$

Variante II:

Alternativ kann der Sollverbrauchswert Sw für die Leiteinrichtung 30 gemäß Figur 1 aus der Kurve gemäß Figur 3 ermittelt werden, indem der Maximalwert der Dichtefunktion P(Wel) ausgelesen wird. Wie sich in der Figur 3 erkennen lässt, liegt der Maximalwert der Dichtefunktion P(Wel) und damit der mittlere Verbrauch bei ca. 60 kW, woraus sich ein entsprechender Sollverbrauchswert Sw = 60 kW ergibt.

Unter Heranziehung des Sollverbrauchswerts Sw kann dann mit Hilfe der Figur 4 ein erster Reservewert Rw1 durch Differenzbildung zwischen dem Sollverbrauchswert Sw und dem maximalen Verbrauchswert Wmax und ein zweiter Reservewert Rw2 durch Differenzbildung zwischen dem Sollverbrauchswert Sw und dem minimalen Verbrauchswert Wmin ermittelt werden.

Im Falle einer Normalverteilung der Energieverbrauchswerte bzw. einer Gauß-Kurve, wie sie in der Figur 3 dargestellt ist, sind die beiden Varianten I und II bezüglich des Ergebnisses identisch, beide Verfahren liefern einen Sollverbrauchswert Sw von 60 kW und zwei gleichgroße Reservewerte Rw1 und Rw2, so dass lediglich ein einziger der beiden Werte, also der Wert Rw1 oder der Wert Rw2 als Reservewert Rw in die Leiteinrichtung 30 gemäß Figur 1 eingespeist werden muss.

Im Falle einer anderen Verteilung als einer Normalverteilung der Verbrauchswerte kann sich ergeben, dass der erste Reservewert Rw1 vom zweiten Reservewert Rw2 abweicht; in diesem Fall ist es von Vorteil, wenn beide Reservewerte Rw1 und Rw2 zur Leiteinrichtung 30 gemäß Figur 1 übertragen werden. Dies wird weiter unten noch näher im Detail erläutert.

In der beschriebenen Weise wird also die Datenverarbeitungseinrichtung 50 gemäß Figur 1 regelmäßig bzw. kontinuierlich einen Reservewert Rw sowie einen Sollverbrauchswert Sw ermitteln und zur Leiteinrichtung 30 übertragen, damit diese die Energieerzeugungseinrichtungen G1 und G2 sowie die Energieverbrauchseinrichtung V1 derart ansteuern kann, dass der tatsächliche Energieverbrauch stets im Bereich des Sollverbrauchswerts Sw liegt und den durch den vorgegebenen Reservewert Rw definierten Reservebereich nicht verlässt.

Um zu erreichen, dass die Verbrauchswerte der Vergangenheit VdV, die im zweiten Datenspeicherbereich 62 des Speichers 60 abgespeichert sind, aktualisiert werden können, ist bei dem Ausführungsbeispiel gemäß Figur 1 vorgesehen, dass die Leiteinrichtung 30 die aktuellen Verbrauchswerte Wist an die Datenverarbeitungseinrichtung 50 überträgt. Die Datenverarbeitungseinrichtung 50 kann die empfangenen Energieverbrauchswerte in dem zweiten Datenspeicherbereich 62 abspeichern und dabei die jeweils ältesten Verbrauchswerte löschen. In dieser Weise wird eine Aktualisierung der Verbrauchswerte der Vergangenheit dahingehend erreicht, dass sich die im zweiten Datenspeicherbereich 62 vorhandenen Verbrauchswerte der Vergangenheit stets auf den jeweils letzten zeitlichen Referenzabschnitt beziehen.

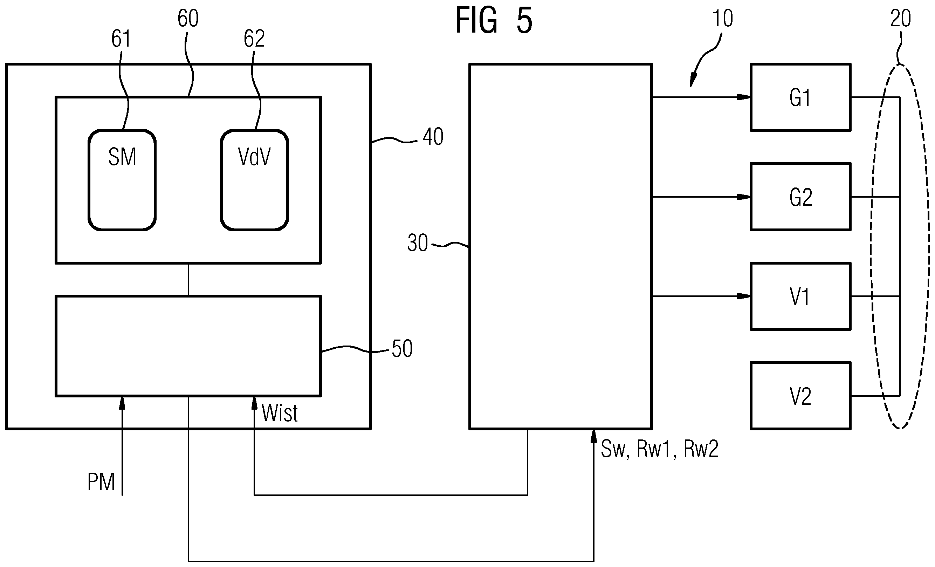

Die Figur 5 zeigt ein zweites Ausführungsbeispiel für eine Energieversorgungsanlage 10, die im Wesentlichen ähnlich aufgebaut ist wie die Energieversorgungsanlage 10 gemäß Figur 1, so dass nachfolgend lediglich auf die Unterschiede eingegangen werden soll.

Die Vorverarbeitungseinrichtung 40 ist derart ausgelegt, dass sie auch für nicht normalverteilte Verbrauchswerte bzw. für nicht standardverteilte Verbrauchswerte eine geeignete Steuerung der Energieversorgungsanlage 10 durch die Leiteinrichtung 30 ermöglicht. Hierzu erzeugt die Datenverarbeitungseinrichtung 50 nicht nur einen Reservewert Rw, sondern zwei Reservewerte Rw1 und Rw2, wie dies oben bereits im Zusammenhang mit der Figur 4 angesprochen worden ist (s. Variante II). Der erste Reservewert Rw1 wird beispielsweise durch Differenzbildung zwischen dem aus der Figur 3 ermittelten Sollverbrauchswert Sw und dem maximalen Verbrauchswert Wmax (vgl. Figur 4) und der zweite Reservewert Rw2 durch Differenzbildung zwischen dem Sollverbrauchswert Sw und dem minimalen Verbrauchswert Wmin (vgl. Figur 4) bestimmt. Die beiden Reservewerte Rw1 und Rw2 werden an die Leiteinrichtung 30 übertragen, so dass diese in der Lage ist, für ein Unterschreiten des Sollverbrauchswertes Sw einen anderen Reservewert heranzuziehen als für den Fall eines Überschreitens des Sollverbrauchswertes Sw, indem sie den jeweils vorgesehenen Reservewert Rw1 oder Rw2 berücksichtigt.

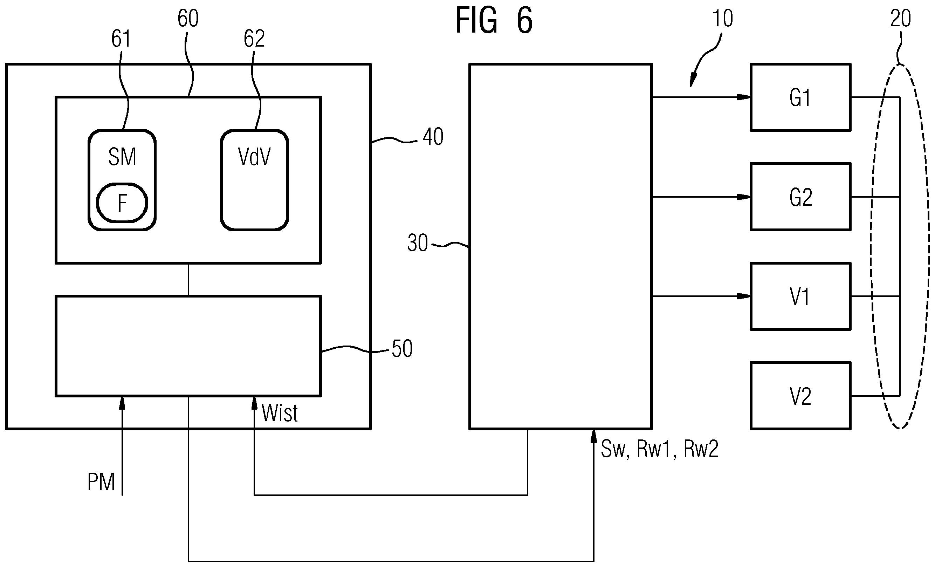

Die Figur 6 zeigt ein drittes Ausführungsbeispiel für eine erfindungsgemäße Energieversorgungsanlage 10. Bei diesem Ausführungsbeispiel führt die Datenverarbeitungseinrichtung 50 der Vorverarbeitungseinrichtung 40 zusätzlich eine Filterfunktion aus. Hierzu ist in dem Vorverarbeitungssteuermodul SM bzw. in dem ersten Datenspeicherbereich 61 des Speichers 60 ein ein Filter bildendes Filtermodul F integriert. Mit diesem Filtermodul ist die Datenverarbeitungseinrichtung 50 in der Lage, die eingehenden Verbrauchswerte Wist der Leiteinrichtung 30 vor dem bzw. beim Abspeichern im zweiten Datenspeicherbereich 62 mit Kennungen zu versehen, die den Wochentag (also z. B. Montag, Dienstag, Mittwoch, ..., Sonntag), die Tagesart (also z. B. Werktag, Samstag, Sonntag oder Feiertag) und/oder die Außentemperatur bei Aufnahme des Verbrauchswerts kennzeichnen. Anhand dieser Kennungen ist es bei einer späteren Auswertung der Verbrauchswerte der Vergangenheit VdV möglich, lediglich solche Verbrauchswerte VdV zu berücksichtigen, die an korrespondierenden Wochentagen, bei korrespondierenden Außentemperaturen und/oder bei korrespondierenden Tagesarten aufgenommen worden sind und alle anderen Verbrauchswerte außer acht zu lassen. Durch eine solche über Kennungen individualisierte Auswertung der Verbrauchswerte der Vergangenheit VdV wird die Ermittlung des Sollverbrauchswerts Sw sowie des oder der Reservewerte Rw deutlich verbessert. Im Übrigen gelten die Detailerläuterungen im Zusammenhang mit der Figur 1 für das Ausführungsbeispiel gemäß Figur 6 entsprechend.

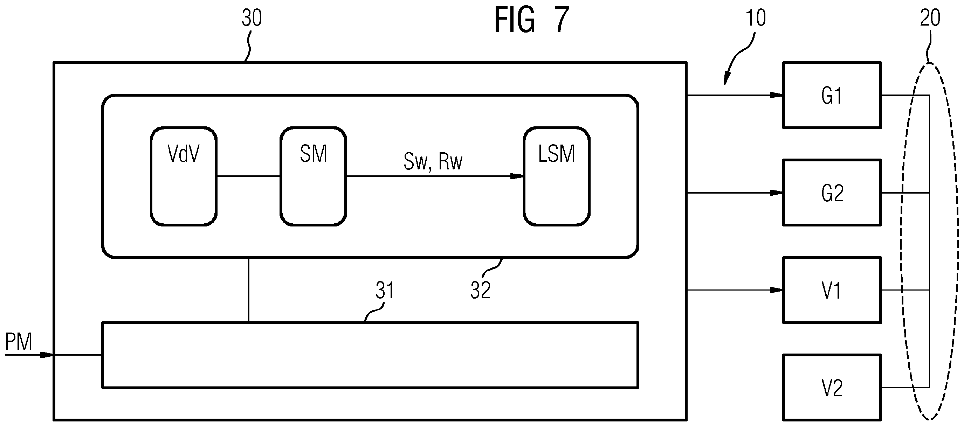

Die Figur 7 zeigt ein Ausführungsbeispiel für eine Energieversorgungsanlage 10, bei der die Vorverarbeitungseinrichtung keine separate Komponente ist, die über eine Schnittstelle 70 mit der Leiteinrichtung 30 (vgl. Figur 1) in Verbindung steht, sondern stattdessen in der Leiteinrichtung 30 integriert ist.

Um eine solche Integration der Vorverarbeitungseinrichtung 40 in die Leiteinrichtung 30 zu ermöglichen, weist die Leiteinrichtung 30 neben einer Datenverarbeitungseinrichtung 31 einen Speicher 32 auf, der sowohl ein Steuermodul LSM als auch die Speicherinhalte SM und VdV des Speichers 60 gemäß Figur 1 aufnehmen kann.

Das Steuermodul LSM enthält Steuerbefehle, die bei Ausführung durch die Datenverarbeitungseinrichtung 31 die Funktionsweise der Leiteinrichtung 30 ermöglichen, wie dies bereits im Zusammenhang mit den Figuren 1 bis 6 erläutert worden ist.

Beim Ausführungsbeispiel gemäß Figur 7 führt die Datenverarbeitungseinrichtung 31 neben dem Steuermodul LSM auch das Vorverarbeitungssteuermodul SM für die Vorverarbeitungseinrichtung 40 aus, so dass die Funktionalität der Vorverarbeitungseinrichtung 40 gemäß den Figuren 1-6 durch die Datenverarbeitungseinrichtung 31 der Leiteinrichtung 30 wahrgenommen wird. Im Rahmen der Bearbeitung des Vorverarbeitungssteuermoduls SM wird die Datenverarbeitungseinrichtung 31 auf die Verbrauchswerte der Vergangenheit VdV zurückgreifen und den benutzerseitig eingegebenen Wahrscheinlichkeitswert PM berücksichtigen, wie dies im Zusammenhang mit den Figuren 1 bis 6 bereits im Detail erläutert worden ist. Die von dem Vorverarbeitungssteuermodul SM gebildeten Werte, nämlich der Reservewert Rw sowie der Sollverbrauchswert Sw gelangen zu dem Steuermodul LSM, das eine Weiterverarbeitung dieser Werte vornimmt, wie dies oben bereits im Zusammenhang mit den Figuren 1 bis 6 erläutert worden ist. Die obigen Ausführungen gelten diesbezüglich also entsprechend.

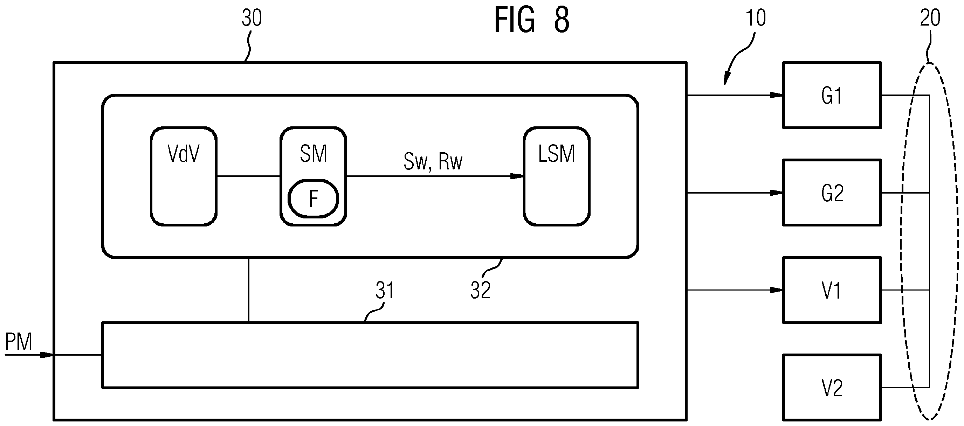

Die Figur 8 zeigt ein Ausführungsbeispiel für eine Energieversorgungsanlage 10, bei der die Vorverarbeitungseinrichtung 40 gemäß Figur 1 ebenfalls in der Leiteinrichtung 30 implementiert ist. Das Vorverarbeitungssteuermodul SM enthält ein Filtermodul F, wie dies bereits im Zusammenhang mit der Figur 6 näher erläutert worden ist. Im Übrigen gelten die obigen Ausführungen entsprechend.

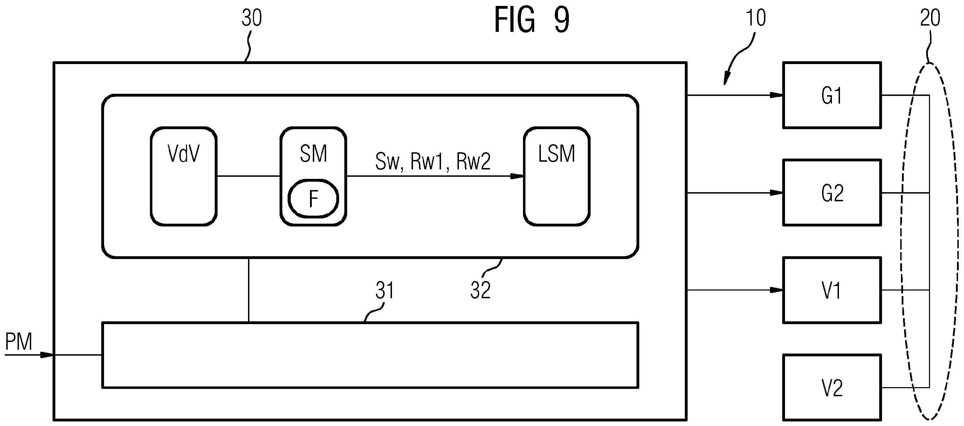

Die Figur 9 zeigt ein weiteres Ausführungsbeispiel für eine Energieversorgungsanlage 10, bei der die Vorverarbeitungseinrichtung 40 gemäß Figur 1 in der Leiteinrichtung 30 integriert ist. Bei diesem Ausführungsbeispiel erzeugt das Vorverarbeitungssteuermodul SM zwei Reservewerte Rw1 und Rw2, wie dies oben im Zusammenhang mit der Figur 5 eingehend erläutert wurde. Die obigen Ausführungen gelten diesbezüglich also entsprechend.

Bezugszeichenliste

| | |
|---|---|
| 10 | Energieversorgungsanlage |
| 20 | Energieverteilnetz |
| 30 | Leiteinrichtung |
| 31 | Datenverarbeitungseinrichtung |
| 32 | Speicher |
| 40 | Vorverarbeitungseinrichtung |
| 50 | Datenverarbeitungseinrichtung |
| 60 | Speicher |
| 61 | erster Datenspeicherbereich |
| 62 | zweiter Datenspeicherbereich |
| 70 | Schnittstelle |

| | |
|---|---|
| F | Filtermodul |
| F(Wel) | Verteilfunktion |
| G1 | Energieerzeugungseinrichtung |
| G2 | Energieerzeugungseinrichtung |
| LSM | Steuermodul |
| M1 | Messwert |
| M2 | Messwert |
| M3 | Messwert |
| PM | Wahrscheinlichkeitswert |

| P(Wel) | Dichtefunktion |
|---|---|
| Rw | Reservewert |
| Rw1 | Reservewert |
| Rw2 | Reservewert |
| SM | Vorverarbeitungssteuermodul |
| Sw | Sollverbrauchswert |
| Wel | Energieverbrauch |
| Wist | aktueller Verbrauchswert |
| Wmax | maximaler Verbrauchswert |
| Wmin | minimaler Verbrauchswert |
| VdV | Verbrauchswerte der Vergangenheit |
| V1 | Energieverbrauchseinrichtung |
| V2 | Energieverbrauchseinrichtung |

**Patentansprüche**

1. Energieversorgungsanlage (10) mit einer Mehrzahl an Energieerzeugungseinrichtungen (G1, G2) und einer Mehrzahl an Energieverbrauchseinrichtungen (V1, V2) sowie einer Leiteinrichtung (30), die die Energieversorgungsanlage (10) steuern kann,

- wobei die Leiteinrichtung (30) derart ausgestaltet ist, dass die Steuerung der Energieversorgungsanlage (10) anhand eines den zu erwartenden Energieverbrauch der Energieversorgungsanlage (10) angebenden Sollverbrauchswerts (Sw) und zumindest eines eine Reserveleistung angebenden Reservewerts (Rw, Rw1, Rw2) durchgeführt wird,
- wobei der zumindest eine Reservewert (Rw, Rw1, Rw2) die von der Energieversorgungsanlage (10) bereitzustellende Reserveleistung angibt, mit der sich im Falle einer Abweichung des tatsächlichen Energieverbrauchs vom Sollverbrauch Notmaßnahmen vermeiden lassen,

**dadurch gekennzeichnet, dass**
die Energieversorgungsanlage (10) eine Vorverarbeitungseinrichtung (40) aufweist, die derart ausgestaltet ist, dass sie anhand aufgezeichneter Verbrauchswerte der Vergangenheit (VdV) und anhand eines benutzerseitig vorgebbaren Wahrscheinlichkeitswerts (PM), der die Wahrscheinlichkeit für einen notmaßnahmenfreien Betrieb der Energieversorgungsanlage (10) vorgibt, den Sollverbrauchswert (Sw) und den zumindest einen Reservewert (Rw, Rw1, Rw2) berechnet, mit dem sich der notmaßnahmenfreie Betrieb mit der jeweils vorgegebenen Wahrscheinlichkeit erreichen lässt, wobei
die Vorverarbeitungseinrichtung (40) derart ausgestaltet ist, dass sie mit den aufgezeichneten Verbrauchswerten der Vergangenheit (VdV) die statistische Verteilung der Verbrauchswerte ermittelt und anhand der statistischen Verteilung bestimmt, welcher minimale Verbrauchswert (Wmin) und welcher maximale Verbrauchswert (Wmax) für den jeweils vorgegebenen Wahrscheinlichkeitswert (PM) auftreten könnte, und anhand des minimalen und maximalen Verbrauchswerts (Wmin, Wmax) den zumindest einen Reservewert (Rw, Rw1, Rw2) bestimmt.

2. Energieversorgungsanlage (10) nach Anspruch 1,
**dadurch gekennzeichnet, dass**
die Vorverarbeitungseinrichtung (40) derart ausgestaltet ist, dass sie den Sollverbrauchswert (Sw) durch Mittelwertbildung aus den aufgezeichneten Verbrauchswerten der Vergangenheit, (VdV) einen ersten Reservewert (Rw1) durch Differenzbildung zwischen dem Sollverbrauchswert und dem maximalen Verbrauchswert (Wmax) und einen zweiten Reservewert (Rw2) durch Differenzbildung zwischen dem Sollverbrauchswert und dem minimalen Verbrauchswert (Wmin) ermittelt.

3. Energieversorgungsanlage (10) nach einem der voranstehenden Ansprüche,
**dadurch gekennzeichnet, dass**

- die Vorverarbeitungseinrichtung (40) derart ausgestaltet ist, dass sie während des Betriebs die Verbrauchswerte der Vergangenheit (VdV) aktualisiert, indem sie die jeweils ältesten aufgezeichneten Verbrauchswerte der Vergangenheit durch aktuell aufgezeichnete Verbrauchswerte ersetzt und
- nach einer Aktualisierung der Verbrauchswerte eine statistische Verteilfunktion (F(Wel)) berechnet, die die statistische Verteilung der aktualisierten Verbrauchswerte der Vergangenheit beschreibt.

4.  Energieversorgungsanlage (10) nach Anspruch 3,
    **dadurch gekennzeichnet, dass**
    die Vorverarbeitungseinrichtung (40) derart ausgestaltet ist, dass sie die statistische Verteilfunktion (F(Wel)) unter der Annahme einer Normalverteilung der Verbrauchswerte berechnet.

5.  Energieversorgungsanlage (10) nach einem der voranstehenden Ansprüche,
    **dadurch gekennzeichnet, dass**
    die Vorverarbeitungseinrichtung (40) derart ausgestaltet ist, dass sie die aufgezeichneten Verbrauchswerte der Vergangenheit (VdV) nach vorgegebenen Tageszeitintervallen auswertet, indem sie pro Tageszeitintervall die statistische Verteilung (F(Wel)) der Verbrauchswerte ermittelt sowie bestimmt, welcher minimale Verbrauchswert (Wmin) und welcher maximale Verbrauchswert (Wmax) für den jeweils vorgegebenen Wahrscheinlichkeitswert in dem aktuellen Tageszeitintervall auftreten könnte, und anhand des minimalen und maximalen Verbrauchswerts den Sollverbrauchswert (Sw) und den Reservewert (Rw, Rw1, Rw2) tageszeitintervallbezogen ermittelt.

6.  Energieversorgungsanlage (10) nach einem der voranstehenden Ansprüche,
    **dadurch gekennzeichnet, dass**
    die Vorverarbeitungseinrichtung (40) derart ausgestaltet ist, dass sie die aufgezeichneten Verbrauchswerte der Vergangenheit (VdV) wochentagsbezogen auswertet und den Sollverbrauchswert (Sw) und den Reservewert (Rw, Rw1, Rw2) wochentagsbezogen bestimmt.

7.  Energieversorgungsanlage (10) nach einem der voranstehenden Ansprüche,
    **dadurch gekennzeichnet, dass**
    die Vorverarbeitungseinrichtung (40) derart ausgestaltet ist, dass sie die aufgezeichneten Verbrauchswerte der Vergangenheit (VdV) außentemperaturbezogen auswertet.

8.  Energieversorgungsanlage (10) nach einem der voranstehenden Ansprüche,
    **dadurch gekennzeichnet, dass**
    die Vorverarbeitungseinrichtung (40) derart ausgestaltet ist, dass sie die aufgezeichneten Verbrauchswerte der Vergangenheit (VdV) unter Berücksichtigung der aktuellen Außentemperatur auswertet, wobei sie prüft, in welchem Temperaturintervall einer vorgegebenen Gruppe von Temperaturintervallen die aktuelle Außentemperatur liegt, die statistische Verteilung ausschließlich derjenigen Verbrauchswerte, die bei einer innerhalb des aktuellen Temperaturintervalls liegenden Außentemperatur gemessen worden sind, ermittelt sowie bestimmt, welcher minimale Verbrauchswert und welcher maximale Verbrauchswert für den jeweils vorgegebenen Wahrscheinlichkeitswert bei der aktuellen Außentemperatur auftreten könnte, und anhand des minimalen und maximalen Verbrauchswerts den Sollverbrauchswert und den Reservewert tageszeitintervallbezogen ermittelt.

9.  Energieversorgungsanlage (10) nach einem der voranstehenden Ansprüche,
    **dadurch gekennzeichnet, dass**
    die Vorverarbeitungseinrichtung (40) derart ausgestaltet ist, dass sie die aufgezeichneten Verbrauchswerte der Vergangenheit (VdV) unter Berücksichtigung der jeweiligen Tagesart auswertet.

10. Energieversorgungsanlage (10) nach Anspruch 9,
    **dadurch gekennzeichnet, dass**
    die Vorverarbeitungseinrichtung (40) derart ausgestaltet ist, dass sie bei der Auswertung der aufgezeichneten Verbrauchswerte der Vergangenheit (VdV) berücksichtigt, welche Art von Tag vorlag, und für die Bestimmung der statistischen Verteilung der Verbrauchswerte jeweils nur solche berücksichtigt, die bei der jeweiligen Tagesart aufgenommen worden sind.

11. Energieversorgungsanlage (10) nach einem der voranstehenden Ansprüche,
    **dadurch gekennzeichnet, dass**
    die Vorverarbeitungseinrichtung (40) einen Bestandteil der Leiteinrichtung (30) bildet.

12. Energieversorgungsanlage (10) nach Anspruch 11,
    **dadurch gekennzeichnet, dass**
    die Leiteinrichtung (30) eine Datenverarbeitungseinrichtung (31) umfasst und die Vorverarbeitungseinrichtung (40) durch ein Vorarbeitungssteuersoftwaremodul (SM) gebildet ist, das von der Datenverarbeitungseinrichtung (31) ausführbar ist.

**13.** Vorverarbeitungseinrichtung für eine Energieversorgungsanlage (10) nach einem der voranstehenden Ansprüche, **gekennzeichnet durch**

- einen Speicher (60), in dem aufgezeichnete Verbrauchswerte der Vergangenheit (VdV) gespeichert sind, und
- eine Datenverarbeitungseinrichtung (50), die derart ausgestaltet ist, dass sie anhand der aufgezeichneten Verbrauchswerte der Verganheit (VdV) und anhand eines benutzerseitig vorgebbaren Wahrscheinlichkeitswerts (PM), der die Wahrscheinlichkeit für einen notmaßnahmenfreien Betrieb der Energieversorgungsanlage (10) vorgibt, einen Sollverbrauchswert (Sw) und einen Reservewert (Rw, Rw1, Rw2) berechnet, mit dem sich der notmaßnahmenfreie Betrieb mit der jeweils vorgegebenen Wahrscheinlichkeit erreichen lässt, wobei die Vorverarbeitungseinrichtung (40) derart ausgestaltet ist, dass sie mit den aufgezeichneten Verbrauchswerten der Vergangenheit (VdV) die statistische Verteilung der Verbrauchswerte ermittelt und anhand der statistischen Verteilung bestimmt, welcher minimale Verbrauchswert (Wmin) und welcher maximale Verbrauchswert (Wmax) für den jeweils vorgegebenen Wahrscheinlichkeitswert (PM) auftreten könnte, und anhand des minimalen und maximalen Verbrauchswerts (Wmin, Wmax) den zumindest einen Reservewert (Rw, Rw1, Rw2) bestimmt.

**14.** Verfahren zum Steuern einer Energieversorgungsanlage (10), die eine Mehrzahl an Energieerzeugungseinrichtungen (G1, G2) und eine Mehrzahl an Energieverbrauchseinrichtungen (V1, V2) aufweist,

- wobei die Steuerung der Energieversorgungsanlage (10) anhand eines den zu erwartenden Energieverbrauch der Energieversorgungsanlage (10) angebenden Sollverbrauchswerts (Sw) und eines eine Reserveleistung angebenden Reservewerts (Rw, Rw1, Rw2) durchgeführt wird, und
- wobei der Reservewert (Rw, Rw1, Rw2) die von der Energieversorgungsanlage (10) bereitzustellende Reserveleistung angibt, mit der sich im Falle einer Abweichung des tatsächlichen Energieverbrauchs vom Sollverbrauch Notmaßnahmen vermeiden lassen,

**dadurch gekennzeichnet, dass**
anhand aufgezeichneter Verbrauchswerte der Vergangenheit (VdV) und anhand eines benutzerseitig vorgebbaren Wahrscheinlichkeitswerts (PM), der die Wahrscheinlichkeit für einen notmaßnahmenfreien Betrieb der Energieversorgungsanlage (10) vorgibt, der Sollverbrauchswert (Sw) und der Reservewert (Rw, Rw1, Rw2) berechnet werden, mit dem sich der notmaßnahmenfreie Betrieb mit der jeweils vorgegebenen Wahrscheinlichkeit erreichen lässt, wobei mit den aufgezeichneten Verbrauchswerten der Vergangenheit (VdV) die statistische Verteilung der Verbrauchswerte ermittelt und anhand der statistischen Verteilung bestimmt wird, welcher minimale Verbrauchswert (Wmin) und welcher maximale Verbrauchswert (Wmax) für den vorgegebenen Wahrscheinlichkeitswert (PM) auftreten können, und anhand des minimalen und maximalen Verbrauchswerts (Wmin, Wmax) der zumindest eine Reservewert (Rw, Rwa, Rwz) beestimmt wird.

## Claims

**1.** Power supply system (10) comprising a plurality of power generating devices (G1, G2) and a plurality of power consuming devices (V1, V2) as well as a controller (30) which can control the power supply system (10),

- wherein the controller (30) is designed to control the power supply system (10) on the basis of a rated consumption value (Sw) specifying the anticipated power consumption of the power supply system (10) and at least one standby value (Rw, Rw1, Rw2) specifying a standby power,
- wherein the at least one standby value (Rw, Rw1, Rw2) specifies the standby power that is to be provided by the power supply system (10) by means of which emergency measures can be avoided if the actual power consumption deviates from the rated consumption,

**characterized in that**
the power supply system (10) has a preprocessing device (40) which is designed to calculate, on the basis of recorded historical consumption values (VdV) and on the basis of a probability value (PM) which is predefinable on the user side and which specifies the probability of an emergency-measure-free operation of the power supply system (10), the rated consumption value (Sw) and the at least one standby value (Rw, Rw1, Rw2) by means of which the emergency-measure-free operation can be achieved with the respectively predefined probability, wherein the preprocessing device (40) is embodied in such a way that it uses the recorded historical consumption values (VdV) to ascertain the statistical distribution of the consumption values and on the basis of the statistical distribution determines which minimum consumption value (Wmin) and which maximum consumption value (Wmax) could occur for the respectively predefined probability value (PM), and on the basis of the minimum and maximum consumption value (Wmin, Wmax) determines the at least one standby value (Rw, Rw1, Rw2) .

2. Power supply system (10) according to Claim 1,
   **characterized in that**
   the preprocessing device (40) is embodied in such a way that it ascertains the rated consumption value (Sw) by forming the average from the recorded historical consumption values (VdV), a first standby value (Rw1) by forming the difference between the rated consumption value and the maximum consumption value (Wmax), and a second standby value (Rw2) by forming the difference between the rated consumption value and the minimum consumption value (Wmin).

3. Power supply system (10) according to one of the preceding claims,
   **characterized in that**

   - the preprocessing device (40) is embodied in such a way that it updates the historical consumption values (VdV) during operation by replacing the oldest recorded historical consumption values in each case with currently recorded consumption values, and
   - after updating the consumption values it calculates a statistical distribution function (F(Wel)) which describes the statistical distribution of the updated historical consumption values.

4. Power supply system (10) according to Claim 3,
   **characterized in that**
   the preprocessing device (40) is embodied in such a way that it calculates the statistical distribution function (F(Wel)) on the assumption of a normal distribution of the consumption values.

5. Power supply system (10) according to one of the preceding claims,
   **characterized in that**
   the preprocessing device (40) is embodied in such a way that it evaluates the recorded historical consumption values (VdV) according to predefined time-of-day intervals, **in that** it ascertains the statistical distribution (F(Wel)) of the consumption values per time-of-day interval and determines which minimum consumption value (Wmin) and which maximum consumption value (Wmax) could occur for the respectively predefined probability value in the current time-of-day interval, and on the basis of the minimum and maximum consumption value ascertains the rated consumption value (Sw) and the standby value (Rw, Rw1, Rw2) relative to the time-of-day interval.

6. Power supply system (10) according to one of the preceding claims,
   **characterized in that**
   the preprocessing device (40) is embodied in such a way that it evaluates the recorded historical consumption values (VdV) relative to the weekday and determines the rated consumption value (Sw) and the standby value (Rw, Rw1, Rw2) on a weekday-related basis.

7. Power supply system (10) according to one of the preceding claims,
   **characterized in that**
   the preprocessing device (40) is embodied in such a way that it evaluates the recorded historical consumption values (VdV) relative to the outside temperature.

8. Power supply system (10) according to one of the preceding claims,
   **characterized in that**
   the preprocessing device (40) is embodied in such a way that it evaluates the recorded historical consumption values (VdV) taking into account the current outside temperature, wherein it checks in which temperature interval of a predefined group of temperature intervals the current outside temperature lies, ascertains the statistical distribution solely of those consumption values that were measured at an outside temperature lying within the current temperature interval, and determines which minimum consumption value and which maximum consumption value could occur for the respectively predefined probability value at the current outside temperature, and on the basis of the minimum and maximum consumption value ascertains the rated consumption value and the standby value relative to the time-of-day interval.

9. Power supply system (10) according to one of the preceding claims,
   **characterized in that**

the preprocessing device (40) is embodied in such a way that it evaluates the recorded historical consumption values (VdV) taking into account the respective type of day.

10. Power supply system (10) according to Claim 9,
**characterized in that**
the preprocessing device (40) is embodied in such a way that when evaluating the recorded historical consumption values (VdV) it takes into account which type of day was present, and for the purpose of determining the statistical distribution of the consumption values it takes into consideration in each case only such values as were recorded on the respective type of day.

11. Power supply system (10) according to one of the preceding claims,
**characterized in that**
the preprocessing device (40) forms part of the controller (30) .

12. Power supply system (10) according to Claim 11,
**characterized in that**
the controller (30) comprises a data processing device (31) and the preprocessing device (40) is formed by a preprocessing control software module (SM) which can be executed by the data processing device (31).

13. Preprocessing device for a power supply system (10) according to one of the preceding claims,
**characterized by**

- a memory (60) in which recorded historical consumption values (VdV) are stored, and
- a data processing device (50) which is embodied in such a way that it calculates, on the basis of the recorded consumption values (VdV) and on the basis of a probability value (PM) which is predefinable on the user side and which specifies the probability of an emergency-measure-free operation of the power supply system (10), a rated consumption value (Sw) and a standby value (Rw, Rw1, Rw2) by means of which the emergency-measure-free operation can be achieved with the respectively predefined probability wherein the preprocessing device (40) is embodied in such a way that it uses the recorded historical consumption values (VdV) to ascertain the statistical distribution of the consumption values and on the basis of the statistical distribution determines which minimum consumption value (Wmin) and which maximum consumption value (Wmax) could occur for the respectively predefined probability value (PM), and on the basis of the minimum and maximum consumption value (Wmin, Wmax) determines the at least one standby value (Rw, Rw1, Rw2).

14. Method for controlling a power supply system (10) comprising a plurality of power generating devices (G1, G2) and a plurality of power consuming devices (V1, V2),

- wherein the control of the power supply system (10) is realized on the basis of a rated consumption value (Sw) specifying the anticipated power consumption of the power supply system (10) and a standby value (Rw, Rw1, Rw2) specifying a standby power, and
- wherein the standby value (Rw, Rw1, Rw2) specifies the standby power that is to be provided by the power supply system (10) by means of which emergency measures can be avoided if the actual power consumption deviates from the rated consumption,

**characterized in that**
the rated consumption value (Sw) and the standby value (Rw, Rw1, Rw2) by means of which an emergency-measure-free operation can be achieved with the respectively predefined probability are calculated on the basis of recorded historical consumption values (VdV) and on the basis of a probability value (PM) which is predefinable on the user side and which specifies the probability of the emergency-measure-free operation of the power supply system (10), wherein the recorded historical consumption values (VdV) are used to ascertain the statistical distribution of the consumption values and on the basis of the statistical distribution it is determined which minimum consumption value (Wmin) and which maximum consumption value (Wmax) can occur for the predefined probability value (PM), and on the basis of the minimum and maximum consumption value (Wmin, Wmax) the at least one standby value (Rw, Rwa, Rwz) is determined.

**Revendications**

1. Installation (10) d'alimentation en énergie, comprenant une pluralité de dispositifs (G1, G2) produisant de l'énergie et une pluralité de dispositifs (V1, V2) consommant de l'énergie ainsi qu'un dispositif (30) de gestion, qui commande l'installation (10) d'alimentation en énergie,

   - dans laquelle le dispositif (30) de gestion est conformé de manière à effectuer la commande de l'installation (10) d'alimentation en énergie à l'aide d'une valeur (Sw) de consommation de consigne indiquant la consommation d'énergie escomptée de l'installation (10) d'alimentation en énergie et d'au moins une valeur (Rw, Rw1, Rw2) de réserve indiquant une puissance de réserve,
   - dans laquelle la au moins une valeur (Rw, Rw1, Rw2) de réserve indique la puissance de réserve, qui est mise à disposition par l'installation (10) d'alimentation en énergie et par laquelle, dans le cas d'un écart de la consommation d'énergie réelle à la consommation de consigne, des mesures d'urgence peuvent être évitées,

   **caractérisée en ce que**
   l'installation (10) d'alimentation en énergie a un dispositif (40) de prétraitement, conformé de manière à calculer, à l'aide de valeurs de consommation enregistrées du passé (VdV) et à l'aide d'une valeur (PM) de probabilité pouvant être prescrite du côté d'un utilisateur et indiquant la probabilité d'un fonctionnement sans mesure d'urgence de l'installation (10) d'alimentation en énergie, la valeur (Sw) de consommation de consigne et la au moins une valeur (Rw, Rw1, Rw2) de réserve par laquelle le fonctionnement sans mesure d'urgence peut être atteint à la probabilité donnée à l'avance, dans laquelle
   le dispositif (40) de prétraitement est conformé de manière à déterminer la distribution statistique des valeurs de consommation par les valeurs de consommation enregistrées du passé (VdV) et à définir, à l'aide de la distribution statistique, la valeur (Wmin) de consommation minimum et la valeur (Wmax) de consommation maximum, qui pourraient apparaître à la valeur (PM) de probabilité donnée à l'avance et à définir, à l'aide des valeurs (Wmin, Wmax) minimum et maximum de consommation, la au moins une valeur (Rw, Rw1, Rw2) de réserve.

2. Centrale (10) d'alimentation en énergie suivant la revendication 1,
   **caractérisée en ce que**
   le dispositif (40) de prétraitement est conformé de manière à déterminer la valeur (Sw) de consommation de consigne en formant la moyenne des valeurs de consommation enregistrées du passé (VdV), une première valeur (Rw1) de réserve par formation de la différence entre la valeur de consommation de consigne et la valeur (Wmax) maximum de consommation et une deuxième valeur (Rw2) de réserve en formant la différence entre la valeur de consommation de consigne et la valeur (Wmin) minimum de consommation.

3. Centrale (10) d'alimentation en énergie suivant l'une des revendications précédentes,
   **caractérisée en ce que**

   - le dispositif (40) de prétraitement est conformé de manière à mettre à jour, pendant le fonctionnement, les valeurs de consommation du passé (VdV) en remplaçant les valeurs de consommation enregistrées les plus anciennes du passé par des valeurs de consommation enregistrées présentement et
   - de manière à calculer, après une mise à jour des valeurs de consommation, une fonction F(We1)) de distribution statistique, qui décrit la dispositif statistique des valeurs de consommation mises à jour du passé.

4. Centrale (10) d'alimentation en énergie suivant la revendication 3,
   **caractérisée en ce que**
   le dispositif (40) de prétraitement est conformé de manière à calculer la fonction (F(We1)) de distribution statistique en supposant une distribution normale des valeurs de consommation.

5. Centrale (10) d'alimentation en énergie suivant l'une des revendications précédentes,
   **caractérisée en ce que**
   le dispositif (40) de prétraitement est conformé de manière à exploiter les valeurs de consommation enregistrées du passé (VdV) après des intervalles de temps d'un jour donné à l'avance en déterminant, ainsi que définissant, par intervalle de temps d'un jour, la distribution (F(We1)) statistique des valeurs de consommation, la valeur (Wmin) minimum de consommation et la valeur (Wmax) maximum de consommation, qui pourraient se produire dans l'intervalle de temps d'un jour présent à la valeur de probabilité donnée à l'avance et en déterminant, à l'aide des valeurs minimum et maximum de consommation, la valeur (Sw) de consommation de consigne et la valeur (Rw, Rw1, Rw2) de réserve rapportées à un intervalle de temps d'un jour.

6. Centrale (10) d'alimentation en énergie suivant l'une des revendications précédentes,
**caractérisée en ce que** le dispositif (40) de prétraitement et conformé de manière à exploiter, rapporté au jour de la semaine, les valeurs de consommation enregistrées du passé (VdV) et à définir, rapporté à un jour de la semaine, la valeur (Sw) de consommation de consigne et la valeur (Rw, Rw1, Rw2) de réserve.

7. Centrale (10) d'alimentation en énergie suivant l'une des revendications précédentes,
**caractérisée en ce que**
le dispositif (40) de prétraitement est conformé pour exploité, rapporté à la température extérieure, les valeurs de consommation enregistrées du passé (VdV).

8. Centrale (10) d'alimentation en énergie suivant l'une des revendications précédentes,
**caractérisée en ce que**
le dispositif (40) de prétraitement est conformé de manière à exploiter les valeurs de consommation enregistrées du passé (VdV) en tenant compte de la température extérieure présente, dans lequel il contrôle dans quel intervalle de température, d'un groupe donné à l'avance d'intervalles de température, se trouve la température extérieure présente, il détermine ainsi que définit la distribution statistique exclusivement des valeurs de consommation, qui ont été mesurées à une température extérieure se trouvant dans l'intervalle de température présent, la valeur minimum de consommation et la valeur maximum de consommation, qui pourraient se produire à la probabilité donnée à l'avance, à la température extérieure présente, et détermine, rapporté à l'intervalle de temps d'un jour, la valeur de consommation de consigne et la valeur de réserve, à l'aide de la valeur minimum et maximum de consommation.

9. Centrale (10) d'alimentation en énergie suivant l'une des revendications précédentes,
**caractérisée en ce que** le dispositif (40) de prétraitement est conformé de manière à exploiter des valeurs de consommation enregistrées du passé (VdV) en tenant compte du type de jour.

10. Centrale (10) d'alimentation en énergie suivant la revendication 9,
**caractérisée en ce que** le dispositif (40) de prétraitement est conformé de manière à prendre en compte, lors de l'exploitation des valeurs de consommation enregistrées du passé (VdV), le type de jour et à ne prendre en compte, pour la définition de la distribution statistique des valeurs de consommation, que celles qui ont été enregistrées pour le type de jour.

11. Centrale (10) d'alimentation en énergie suivant l'une des revendications précédentes,
**caractérisée en ce que** le dispositif (40) de prétraitement forme une partie constitutive du dispositif (30) de gestion.

12. Centrale (10) d'alimentation en énergie suivant la revendication 11?
**caractérisée en ce que** le dispositif (30) de gestion comprend un dispositif (31) de traitement de données et le dispositif (40) de prétraitement de données est formé d'un module (SM) logiciel de commande de prétraitement, qui peut être réalisé par le dispositif (31) de traitement de données.

13. Dispositif de prétraitement pour une installation (10) d'alimentation en énergie suivant l'une des revendications précédentes,
**caractérisé par**

 - une mémoire (60), dans laquelle sont mémorisées des valeurs de consommation enregistrées du passé (VdV) et
 - un dispositif (50) de traitement de données conformé pour calculer, à l'aide des valeurs de consommation enregistrées du passé (VdV), à l'aide d'une valeur (PM) de probabilité, qui peut être donnée à l'avance du côté d'un utilisateur et qui indique la probabilité d'un fonctionnement sans mesure d'urgence de l'installation (10) d'alimentation en énergie, une valeur (Sw) de consommation de consigne et une valeur (Rw, Rw1, Rw2) de réserve, par laquelle le fonctionnement sans mesure d'urgence peut être atteint à la probabilité donnée à l'avance, le dispositif (40) de prétraitement étant conformé de manière à déterminer la distribution statistique des valeurs de consommation par les valeurs de consommation enregistrées du passé (VdV) et à définir, à l'aide de la distribution statistique, la valeur (Wmin) de consommation minimum et la valeur (Wmax) de consommation maximum, qui pourraient apparaître à la valeur (PM) de probabilité donnée à l'avance et à définir, à l'aide des valeurs (Wmin, Wmax) minimum et maximum de consommation, la au moins une valeur (Rw, Rw1, Rw2) de réserve.

14. Procédé de commande d'une installation (10) d'alimentation en énergie, qui a une pluralité de dispositifs (G1, G2) produisant de l'énergie et une pluralité de dispositifs (V1, V2) consommant de l'énergie,

- dans lequel on effectue la commande de l'installation (10) d'alimentation en énergie à l'aide d'une valeur (Sw) de consommation de consigne indiquant la consommation d'énergie escomptée de l'installation (10) d'alimentation en énergie et d'une valeur (Rw, Rw1, Rw2) de réserve indiquant une puissance de réserve et
- dans lequel la valeur (Rw, Rw1, Rw2) de réserve indique la puissance de réserve, qui est mise à disposition par l'installation (10) d'alimentation en énergie et par laquelle, dans le cas d'un écart de la consommation d'énergie réelle à la consommation de consigne, des mesures d'urgence peuvent être évitées,

**caractérisé en ce qu'**
à l'aide des valeurs de consommation enregistrée du passé (VdV) et à l'aide d'une valeur (PM) de probabilité pouvant être prescrite du côté d'un utilisateur et indiquant la probabilité d'un fonctionnement sans mesure d'urgence de l'installation (10) d'alimentation en énergie, on calcule la valeur (Sw) de consommation de consigne et la valeur (Rw, Rw1, Rw2) de réserve par laquelle le fonctionnement sans mesure d'urgence peut être atteint à la probabilité donnée à l'avance, dans lequel, par les valeurs de consommation enregistrées du passé (VdV), on détermine la distribution statistique des valeurs de consommation et, à l'aide de la distribution statistique, on définit la valeur (Wmin) minimum de consommation et la valeur (Wmax) maximum de consommation, qui pourraient se produire à la valeur (PM) de probabilité donnée à l'avance et, à l'aide des valeurs (Wmin, Wmax) minimum et maximum de consommation, on définit la au moins une valeur (Rw, Rwa, Rwz) de réserve.

FIG 1

FIG 2

FIG 3

EP 2 847 842 B1

# FIG 4

FIG 5

EP 2 847 842 B1

FIG 6

EP 2 847 842 B1

EP 2 847 842 B1

FIG 7

FIG 8

EP 2 847 842 B1

FIG 9

EP 2 847 842 B1

**EP 2 847 842 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 200770213878 A1